# EUROPEAN PATENT APPLICATION

(11) **EP 2 105 689 A1**
(43) Date of publication of application: **30.09.2009**
(21) Application number: 08381012.7
(22) Date of filing: 28.03.2008
(51) Int. Cl.: F26B 3/28, F26B 7/00, F26B 23/10, C02F 11/12

(54) **Procedure and optimised installation of sludge treatment using solar energy**

(71) Applicant: Dytras, S.A., 41700 Dos Hermanas (ES)
(72) Inventor: Cassillas Ovando, Álvaro, 41700 Dos Hermanas (Sevilla) (ES); Coca Sánchez, Rafael Evaristo, 41700 Dos Hermanas (Sevilla) (ES); Oterino Barrosso, Luis Miguel, 41700 Dos Hermanas (Sevilla) (ES); Candau Romero, Álvaro, 41700 Dos Hermanas (Sevilla) (ES)
(74) Representative: Esteban Perez-Serrano, Maria Isabel

(57) **Abstract**

Both the procedure and the installation which are the object of this invention are applicable to the field of waste water treatment, and specifically, the handling, transport and final deposit of the resulting sludge. The optimised procedure of sludge treatment using solar energy which is the object of this invention is characterised in that it includes the collection of thermal solar energy and the exchange of heat with the sludge to raise its temperature, prior to a stage of mechanical dehydration, thus achieving an increase in the dehydration levels of the resulting sludge.

## Description

### OBJECT OF THE INVENTION

This invention refers to an optimised procedure for treating sludge making use of solar energy, and an optimised installation which uses said procedure.

Both the procedure and the installation which are the object of this invention are applicable to the field of waste water treatment and specifically the handling, transport and final deposit of the resulting sludge.

The optimised procedure of sludge treatment using solar energy which is the object of this invention is **characterised in that** it includes the collection of thermal solar energy and the exchange of heat with the sludge to raise its temperature prior to a stage of mechanical dehydration, thus achieving an increase in the dehydration level of the resulting sludge.

### BACKGROUND TO THE INVENTION

The proliferation of waste water treatment stations is causing a clear increase in the world production sludge and with this increase new problems have arisen relating to the handling, transport and final placement of this sludge.

Numerous technologies have been developed designed to obtain inert sludge with a high degree of dryness which will facilitate its handling and storage (heat drying technologies for example). Other options considered have also included composting, agricultural use or the placement in dumps.

The sludge generated in treatment stations, even when it has been thickened, still has a high water content (normally over 95%) which complicates and increases the cost of handling and transport of said sludge, as well as the possibility of its application in any of the aforementioned destinations or procedures, (heat drying, dumps, composting, etc). It is for this reason that an intermediate mechanical dehydration stage is usually used designed to obtain sludge with a somewhat lower water content (around 80%) which permits easier handling thereof.

There are a number of devices for carrying out mechanical dehydration of previously thickened sludge: Centrifugal decantation equipment, band filters, press filters, filter sleeves, etc. In all these it is appropriate to chemically treat the sludge to be dehydrated beforehand in order to ensure that there is an efficient separation of water contained in the sludge. Another factor which has been shown to notably influence the dehydration level of the sludge is the temperature at which this is applied. The greater the temperature of the sludge the easier it is to dehydrate it, permitting greater dryness to be obtained (less water content in the dehydrated sludge) and optimisation in consumption of chemical reactants. According to the operating temperatures adopted, water content of around 70% is easily achieved, some ten points below customary values (around 80%) and thus considerable cost savings in handling, transport and dumping fees.

The object of this invention is to achieve this sludge heat treatment with minimum energy consumption, using renewable sources, which respect the environment and the philosophy of sustainable development. The procedure described in this report considers the use of thermal solar energy as a source of heat, proposing for this purpose an installation which optimises energy performance.

### DESCRIPTION OF THE INVENTION

This invention refers to an optimised procedure for conditioning sludge making use of solar energy, and an optimised installation which uses said procedure.

The optimised sludge treatment procedure using solar energy is **characterised in that** it comprises a sludge supply stage and a stage of thermal solar energy collection designed to raise the temperature of a fluid, a heat exchange stage between the sludge supply and the aforementioned fluid, designed to raise the temperature of the sludge, followed by a final stage of mechanical dehydration of the sludge.

In addition, the optimised sludge dehydration installation using solar energy which is the object of this invention is **characterised in that** it comprises:
- A sludge inlet
- A thermal solar energy collector device connected to a heat carrying fluid circuit The fluid carrying circuit may include a double fluid carrying circuit.
- A heat exchange device which comprises a sludge supply and a heat carrying fluid supply.
- A mechanical dehydration unit for the heated sludge.

In this way the sludge dehydration process achieves greater efficiency, providing a final product with less water content and therefore greater manipulability of the material.

### DESCRIPTION OF THE DRAWINGS

The present descriptive report is complemented by a set of plans illustrating a preferred embodiment of the invention, but which is in no way restrictive.

Figure 1 shows a diagram of the processes involved in an embodiment of the sludge treatment.

Figure 2 shows a diagram of an example of an embodiment illustrating a heat exchange device between a heat carrying fluid and the sludge destined to raise the temperature thereof.

Figure 3 shows a diagram of an example of an embodiment corresponding to a device for the collection and accumulation of thermal solar energy.

### PREFERRED EMBODIMENT OF THE INVENTION

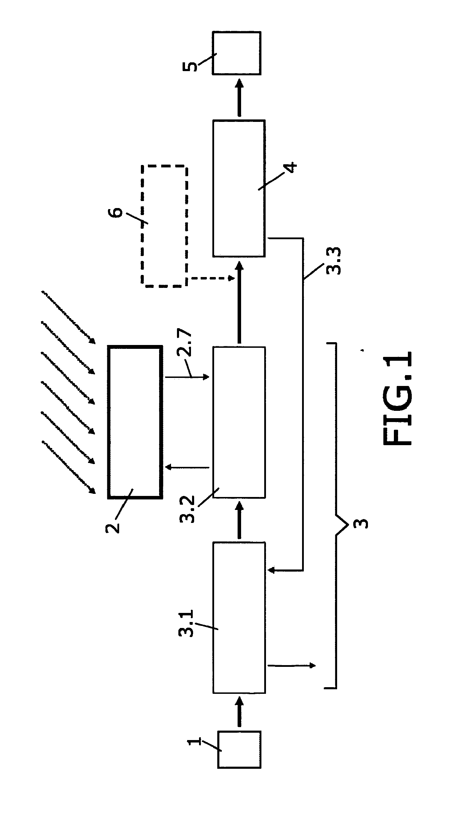

Figure 1 shows a diagram of the processes involved in treating the sludge according to the procedure in this invention. It comprises a sludge feed stage (1) and a thermal solar energy collection stage (2) which is designed to raise the temperature of a fluid (2.7). Both stages are followed by a heat exchange (3) between the sludge supply (1) and the aforementioned fluid (2.7) designed to raise the heat of the sludge. Finally, a mechanical dehydration (4) of the heated sludge takes place, followed by subsequent storage thereof (5).

The storage (5) shown in figure two comprises a silo (5.1) and a sludge pumping installation (5.2).

The nature and characteristics of these start (1) and finish (5) points of the process may vary according to the elements comprising the treatment station (mechanical sludge thickener, storage deposits (5.1) metal containers etc.). The sludge inlet (1) may include a thickener (1.1) by means of gravity, see figure 1.

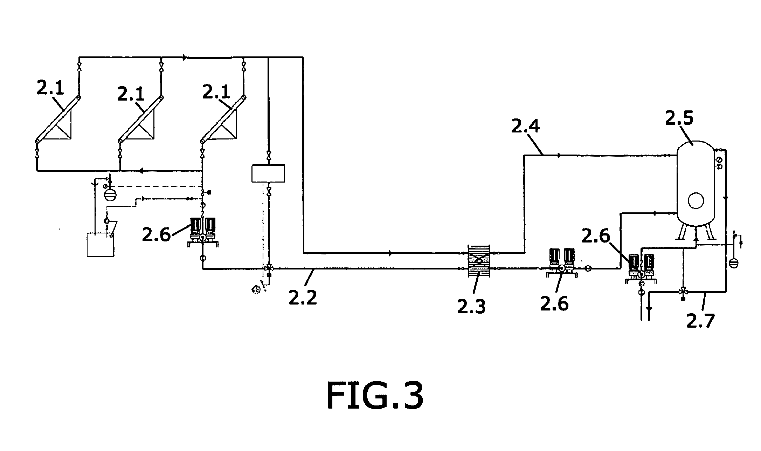

Figure 3 shows an embodiment of the solar collection device which also includes a storage stage (2.5) The solar collector device (2) comprises one or more solar collectors (2.1) which may be of any kind. In its preferred execution form the solar collectors (2.1) are vacuum pipes, given that compared to conventional flat collectors they make greater use of sun in the winter, due to the fact that thermal losses in solar collection are considerably reduced and they provide greater optical results.

In the embodiment shown in figure 3 of the solar energy collection and accumulation device (2) the solar collectors (2.1) are situated in connection with a primary circuit (2.2) which is provided with the heated fluid carrier in connection with heat exchange means (2.3) which are situated in turn in connection to a secondary circuit (2.4) for a second fluid which is heated and stored in a storage tank (2.5). The secondary circuit (2.4) fluid may, for example, be network water.

Both the primary circuit (2.2) and the secondary circuit (2.) include pumping equipment (2.6).

Use of a heat carrying fluid with specific characteristics (greater specific heat) in the primary circuit (2.2) improves the energy performance of the installation. This primary circuit (2.2) may be provided with various safety devices to prevent and contain possible leaks of this heat carrying fluid (safety valves, filling and emptying tanks, unit heater etc.).

Heating of the sludge prior to its entering the mechanical dehydration equipment (4) shall be achieved as a result of the heat obtained from the thermal solar installation (2), by means of a heat exchange stage (3).

In the preferred embodiment of the stage of heat exchange between the sludge supply and the aforementioned fluid designed to raise the temperature of the sludge, two stages shall take place, an initial preheating stage and a second stage in which the sludge is raised to operating temperature. In the example shown, the sludge is heated in exchangers (3.1, 3.2) in independent series, however both stages may be made in the same exchanger with two independent bodies.

In an initial stage, within the first exchanger or regenerator (3.1) the sludge will be preheated, using the residual heat existing in the leachate (3.3) from the dehydration equipment (4) (water extracted from the dehydrated sludge) and the second exchanger (3.2) fed by heat generated by the solar collector equipment (2). In the second and final stage within the exchanger (3.2), the sludge shall be heated to the designated operating temperature, using for this purpose the hot water (2.7) stored by the solar energy installation (2).

In its preferred form of execution, two exchangers (3.1, 3.2) with a double pipe shall be used, however these may be substituted by another type of exchanger suitable for operating with thickened sludge (spiral exchangers for example). This type of exchanger (3.1, 3.2) comprises two concentric pipes through which fluids circulate and exchange their heat, that is, the sludge to be heated through the central pipe, and the hot water through the circular space around it.

The movement of the sludge and that of the water and the hot leachate shall be ensured by means of different pumps (2.6).

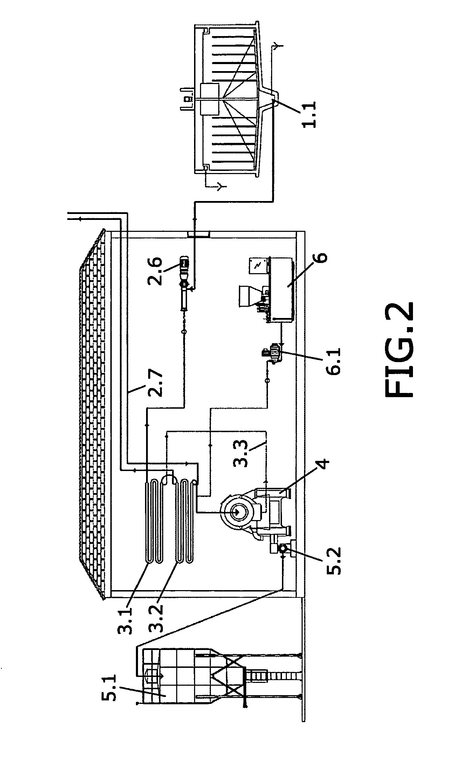

In the example of an embodiment corresponding to figure 2, the dehydration equipment (4) is also shown and the preparation and dosing equipment for the chemical additives prior to the mechanical dehydration unit (4).

In its preferred form of execution, a polyelectrolyte is considered as a chemical reactant, prepared in an apparatus and dosed by means of a screw pump (6.1). The nature of the chemical reactant to be used as well as the equipment required for its preparation and dosing shall depend in any case on its greater or lesser adaptation to the sludge to be treated in each case.

With respect to the dehydration equipment (4) to be employed, there are a number of possibilities (centrifugal decanting, band filters, press filters, filtration sleeves etc). In the preferred form of execution the use of centrifugal decanters is considered, given that their smaller and more compact body ensures that heat loss is reduced during dehydration, helping to obtain a high temperature leachate and therefore making better use of this in the regenerator device (3.2).

The sludge sent to dehydration has been previously thickened, either through the process of gravity or though mechanical means, or any other appropriate process, with its water content as a general rule being between 90% and 99%, and preferably between 97% and 98%.

## Claims

1. Optimised installation for sludge treatment using solar energy **characterised in that** it comprises:
• A sludge inlet (1).
• A thermal solar energy collector device (2) connected to a heat carrying fluid circuit
• A heat exchanger device (3) which comprises a heat carrying fluid supply and a sludge supply designed to raise the temperature thereof.
• A mechanical dehydration unit (4) for the heated sludge.

2. An optimised sludge treatment installation using solar energy according to claim 1, **characterised in that** the thermal solar energy collector device (2) comprises one or more solar collectors (2.1) in connection with a primary circuit (2.2) which is provided with a heat carrying fluid in connection with heat exchange means (2.3) which in turn are connected to a secondary circuit (2.4) for a second fluid.

3. Optimised sludge treatment installation using solar energy , according to claim 2, **characterised in that** the primary circuit (2.2) comprises a fluid with greater specific heat than the secondary circuit (2.4).

4. Optimised sludge treatment installation using solar energy, according to claim 1, **characterised in that** it comprises a storage tank (2.5) for the heat carrying fluid.

5. Optimised sludge treatment installation using solar energy, according to claim 1, **characterised in that** the heat exchanger device (3) comprises an initial sludge preheating body and a second body in which the sludge is brought to operating temperature.

6. Optimised sludge treatment installation using solar energy according to claim 5, **characterised in that** the initial body is supplied with residual heat from the dehydration (4) of the sludge and the second body though heat generated by the solar collector device (2)

7. Optimised sludge treatment installation using solar energy, according to claim 5, **characterised in that** the heat exchanger device (3) comprises exchangers (3.1, 3.2) in series.

8. Optimised sludge treatment installation using solar energy, according to claim 1, **characterised in that** it comprises preparation and dosing equipment for the chemical additives (6) prior to the mechanical dehydration unit (4).

9. Optimised sludge treatment procedure using solar energy, **characterised in that** it comprises a sludge supply stage and a stage of thermal solar energy collection designed to raise the temperature of a fluid, a heat exchange stage between the sludge supply and the aforementioned fluid designed to raise the temperature of the sludge, followed by a final stage of mechanical dehydration of the sludge.

10. Optimised sludge treatment procedure using solar energy, according to claim 9, **characterised in that** the stage of thermal solar energy collection comprises heating of an initial fluid of a high specific heat followed by a stage of exchange of heat to a second fluid.

11. Optimised sludge treatment installation using solar energy, according to claim 10, **characterised in that** it comprises a final stage of storage of the heat carrying fluid.

12. Optimised sludge treatment installation using solar energy, according to claim 9, **characterised in that** the stage of heat exchange between the sludge supply and the heat carrying fluid comprises an initial pre-heating stage, and a second stage in which the sludge is brought to operating temperature.

13. Optimised sludge treatment installation using solar energy, according to claim 12, **characterised in that** the first stage makes use of residual heat from the sludge dehydration.

14. Optimised sludge treatment installation using solar energy, according to claim 12, **characterised in that** the second stage comprises a supply of heated fluid using heat generated by the solar collector device.

15. Optimised sludge treatment installation using solar energy, according to claim 9, **characterised in that** it additionally comprises a stage of dosing with chemical additives prior to the mechanical dehydration stage.

## Amended claims

### Amended claims in accordance with Rule 137(2) EPC.

**1.** Optimised installation for sludge treatment wherein the sludge come from water treatment stations (page 1, lines 28-30) using solar energy comprising:
- A sludge inlet (1)
- A thermal solar energy collector device (2)connected to a heat carrying fluid circuit
- A heat exchanger device (3) which comprises a heat carrying fluid supply and a sludge supply designed to raise the temperature thereof.
- A mechanical dehydration unit (4) for the heated sludge.
**Characterized in that**:
the heat exchanger device (3) comprises an initial sludge preheating body (3.1) and a second body (3.2) in which the sludge is brought to operating temperature, wherein the initial body (3.1)is supplied with residual heat from the dehydration (4) of the sludge and the second body through heat generated by the solar collector device (2).

**2.** An optimised sludge treatment installation using solar energy according to claim 1, **characterised in that** the thermal solar energy collector device (2) comprises one or more solar collectors (2.1) in connection with a primary circuit (2.2) which is provided with a heat carrying fluid in connection with heat exchange means (2.3) which in turn are connected to a secondary circuit (2.4) for a second fluid.

**3.** Optimised sludge treatment installation using solar energy ; according to claim 2, **characterised in that** the primary circuit (2.2) comprises a fluid with greater specific heat than the secondary circuit (2.4).

**4.** Optimised sludge treatment installation using solar energy, according to claim 1, **characterised in that** it comprises a storage tank (2.5) for the heat carrying fluid.

**5.** Optimised sludge treatment installation using solar energy, according to claim 1 , **characterised in that** the heat exchanger device (3) comprises exchangers (3.1, 3.2) in series.

**6.** Optimised sludge treatment installation using solar energy, according to claim 1, **characterised in that** it comprises preparation and dosing equipment for the chemical additives (6) prior to the mechanical dehydration unit (4).

**7.** Optimised sludge treatment procedure using solar energy, **characterised in that** it comprises a sludge supply stage and a stage of thermal solar energy collection designed to raise the temperature of a fluid, a heat exchange stage between the sludge supply and the aforementioned fluid designed to raise the temperature of the sludge, followed by a final stage of mechanical dehydration of the sludge **characterized in that** the stage of heat exchange between the sludge supply and the heat carrying fluid comprises an initial pre-heating stage which makes use of residual heat from the sludge dehydration, and a second stage in which the sludge is brought to operating temperature.

**8.** Optimised sludge treatment procedure using solar energy, according to claim 7, **characterised in that** the stage of thermal solar energy collection comprises heating of an initial fluid of a high specific heat followed by a stage of exchange of heat to a second fluid.

**9.** Optimised sludge treatment installation using solar energy, according to claim 8, **characterised in that** it comprises a final stage of storage of the heat carrying fluid.

**10.** Optimised sludge treatment installation using solar energy, according to claim 7, **characterised in that** the stage of heat exchange between the sludge supply and the heat carrying fluid comprises an initial pre-heating stage, and a second stage in which the sludge is brought to operating temperature.

**11.** Optimised sludge treatment installation using solar energy, according to claim 7, **characterised in that** it additionally comprises a stage of dosing with chemical additives prior to the mechanical dehydration stage.
